# EUROPEAN PATENT APPLICATION

(11) **EP 2 023 537 A1**
(43) Date of publication of application: **11.02.2009**
(21) Application number: 07720251.3
(22) Date of filing: 15.02.2007
(51) Int. Cl.: H04L 12/28

(54) **PROTECTING METHOD FOR DATA SIGNAL TRANSMISSION AND COMMUNICATION NETWORK**

(30) Priority: 27.05.2006 CN 200610060887
(71) Applicant: Huawei Technologies Co., Ltd., Longgang District, Shenzhen Guangdong 518129 (CN)
(72) Inventor: HE, Jianfei, Shenzhen Guangdong 518129 (CN)
(74) Representative: Löfgren, Bengt Håkan Alpo
(86) International application number: PCT/CN2007/000552
(87) International publication number: WO 2007/137471

(57) **Abstract**

A protecting method for data signal transmission includes that the source node transfers the same data signal along each path between the source node and the destination node; in at least one path, the data signal is copied to multipath data signals at least one time, and one path data signal of the copied multipath data signals is transferred along the path continuatively, and the other copied multipath data signals are transferred to other paths respectively, therein the path at which multipath data signals would arrive selects one path data signal to receive and transfer; the destination node receives one path data signal from at least one path. The links which can transfer data signal are among multiple paths which are between the source node and the destination node, even if the links in multiple paths disable at the same time, the links among multiple paths also can connect the non-disabled links in multiple paths, therefore the data signal can be carried normally, and the normal communication between the source node and the destination node can be implemented.

## Description

This application claims priority to Chinese patent application No. 200610060887.9, entitled "METHOD FOR 1+1 UNIDIRECTIONAL SUB-NETWORK CONNECTION PROTECTION AND COMMUNICATION NETWORK ADOPTING THE METHOD" and filed with the Chinese Patent Office on May 27, 2006, the contents of which are incorporated herein by reference in its entirety.

### Field of the Invention

The present invention relates to communication network technologies, and in particular to a protection technology for traffic signal transport in a communication network.

### Background of the Invention

Forwarding or transport of traffic signals is a primary task for nodes in a communication network and sub-network connection thereof. Typically, a node in the communication network and the sub-network connection thereof, which is the first to transport or forward some traffic signal, is referred to as a source node, and a node, which is the last to receive the traffic signal, is referred to as a destination node. At least one intermediate node for forwarding the traffic signal can be provided between the source node and the destination node, and a link can be used to carry the traffic signal between every two adjacent nodes. A link in the sub-network connection may fail due to various reasons in a practical application, and thus the source node may fail to transport the traffic signal to the destination node normally.

Those skilled in the art have proposed a protection solution for traffic signal transport in order that a traffic signal can be transported normally between the source node and the destination node even if the sub-network connection cannot carry the traffic signal normally. An essential idea of the solution lies in that at least one backup connection is established between the source node and the destination node. Like a connection for normal use, the backup connection carries the same traffic signal. If the connection for normal use fails, the traffic signal can still be carried over the backup connection, and hence normal transport of the traffic signal can be ensured between the source node and the destination node.

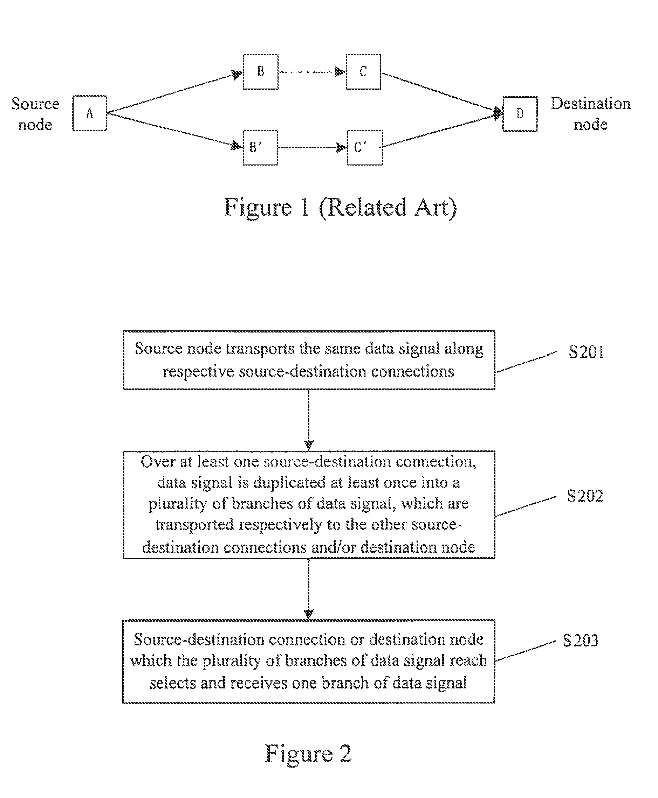

Taking protection method of an End-to-End (E2E) connection illustrated in Figure 1 as an example, there are two end-to-end connections between a source node A and a destination node D, i.e. A-B-C-D and A-B'-C'-D, where the two connections carry the same traffic signal, respectively. The source node A sends a traffic signal over the two connections, and the destination node D selects the traffic signal over a normal connection dependent upon status of the two connections. Thus it can be ensured that even if one connection fails, the traffic signal can reach the destination node over the other connection.

If the link between A-B and the link between C'-D fail simultaneously, however, both of the connections may fail and consequently the destination node D may fail to receive the traffic signal normally. Therefore, the existing protection method for traffic signal transport can ensure normal traffic signal transport between the source node and the destination node only if all links of at least one connection are normal. Unfortunately, whether a link is normal or not may depend upon numerous factors, and a failure of the link may occur inevitably in a practical application. In view of this, even the backup connection cannot ensure that all links over which would operate normally. Consequently, the existing protection method for traffic signal transport cannot ensure normal transport of a traffic signal in the case that links over respective connections fail simultaneously.

### Summary of the Invention

The embodiments of the present inventions provide a protection method and a communication network for traffic signal, and the method and network provided can ensure normal transport of a traffic signal.

The embodiments of the present invention provide a protection method for traffic signal transport, including:
transporting, by a source node, the same traffic signal along each path between the source node and a destination node;
duplicating the traffic signal at least once into a plurality of branches of the traffic signal over at least one of the paths, transporting one of the branches of the duplicated traffic signal along the present path, and transporting the other branches of the duplicated traffic signal respectively to the other paths, where a path which a plurality of branches of the traffic signal reach selects, receives and transports one of the branches of the traffic signal; and
receiving, by the destination node, one of the branches of the traffic signal over at least one of the paths,

The embodiments of the present invention provide a communication network, including:
a bridge included in a source node, adapted to duplicate a traffic signal into a plurality of branches of the traffic signal and transport the same traffic signal along each path;
at least one bridge provided over at least one of the paths, adapted to duplicate the traffic signal into a plurality of branches of the traffic signal, transport one of the branches of the duplicated traffic signal along the present path, and transport the other branches of the duplicated traffic signal respectively to the other paths; and
at least one selector provided for a destination node or over a path which a plurality of branches of the traffic signal reach, adapted to select and receive one of the branches of the traffic signal.

In the embodiments of the present invention, the traffic signal is duplicated into a plurality of branches of the traffic signal over at least one path, one of the branches of the duplicated traffic signal is transported along the present path, and the other branches of the duplicated traffic signal are transported respectively to the other paths. In this case, there are links capable of transporting the traffic signal among the plurality of paths between the source node and the destination node, and even if links over plurality of paths fail simultaneously, the links among the paths can interconnect links which do not fail over the plurality of paths. Therefore, the traffic signal can be carried normally to enable normal communication between the source node and the destination node.

### Brief Description of the Drawings

Figure 1 is a schematic diagram illustrating a protection method of an end-to-end connection in the prior art;

Figure 2 is a flow chart illustrating a method according to embodiments of the present invention;

Figure 3 is a schematic diagram illustrating a first embodiment of the present invention;

Figure 4 is a schematic diagram illustrating a second embodiment of the present invention;

Figure 5 is a schematic diagram illustrating a third embodiment of the present invention;

Figure 6 is a schematic diagram illustrating the architecture for OAM of a connection sub-layer of a multicast sub-network according to the third embodiment of the present invention;

Figure 7 is a schematic diagram illustrating a fourth embodiment of the present invention;

Figure 8 is a schematic diagram illustrating a fifth embodiment of the present invention;

Figure 9 is a schematic diagram illustrating a sixth embodiment of the present invention;

Figure 10 is a schematic diagram illustrating a seventh embodiment of the present invention; and

Figure 11 is a schematic diagram illustrating an eighth embodiment of the present invention,

### Detailed Description of the Embodiments

A method according to embodiments of the present invention will be described firstly with reference to Figure 2. The method according to embodiments of the present invention can be applied to a communication network which may have such a structure that includes a source node and a destination node between which there may be a plurality of connections. It shall be noted that the source node and the destination node are a source node and a destination node of a sub-network connection and may be a source node and a destination node for a service. Alternatively, they may not be a source node and a destination node of a service, but instead, are connected with a source node and a destination node of a service via some intermediate nodes or directly. As illustrated in Figure 2, the method according to embodiments of the present invention is as follows.

Block S201: The source node transports the same traffic signal along each path.

The source node can duplicate the traffic signal into traffic signals with the same number as that of the paths by means of a bridge, and can also acquire a plurality of branches of the same traffic signal by means of another device capable of duplicating signals or converting a branch of signal into a plurality of branches of the same signal, and then transport each branch of the traffic signal along a path.

Block S202: The traffic signal is duplicated at least once into a plurality of branches of the traffic signal over at least one path, and then one branch of the duplicated traffic signal is transported over the present path, and the other branches of the traffic signal are transported to other paths.

At least one bridge or other device capable of duplicating signals or converting a branch of signal into a plurality of branches of the same signal can be provided over a path. A traffic signal can be duplicated at least once into a plurality of branches of the traffic signal over the path due to presence of the bridge or the device, and duplicated traffic signal can be transported to other paths along a link or path between the paths. A traffic signal transported over a path can reach the destination node via an intermediate node over the present path or directly if the traffic signal does not meet the bridge or other device.

As can be seen from above, paths for traffic signal transport may increase if a traffic signal can be transported among paths. Thus, even if links over plurality of paths fail simultaneously, a link or path among the paths can interconnect links which do not fail over the paths. Hence, the traffic signal can be carried normally so as to ensure normal communication between the source node and the destination node.

Block S203: A path or the destination node which a plurality of branches of the traffic signal reach selects and receives one branch of the traffic signal.

At least one selector can be provided over a path, and a selector can also be provided for the destination node. The path or the destination node can select and receive one among a plurality of branches of the reaching traffic signal due to presence of the selector. Further, the path or the destination node can select and receive one branch of the traffic signal with a qualified signal quality through the selector. Whether a quality of the traffic signal is qualified or not can be determined in such a way that a signal quality qualified criteria or threshold is set and it is determined that a branch of the traffic signal is qualified when the branch of the traffic signal meets the quality criteria or is not lower than the threshold. If a plurality of branches of the traffic signal are determined to be qualified through the selector, one branch of the traffic signal with the highest quality can be selected or one branch of the traffic signal can be selected randomly among the plurality of branches of the qualified traffic signal.

A quality of the traffic signal can also be determined through monitoring each branch of the traffic signal.

Each branch of the reaching traffic signal can be monitored in such a way that end-to-end overhead or Operation, Maintenance and Management (OAM) information, and/or, sub-layer overhead or OAM information, of each branch of the reaching traffic signal, is detected. Specifically, a monitoring unit can be provided in front of the selector to detect overhead or OAM information of at least one branch of the traffic signal. Alternatively, a monitoring unit may also monitor overhead or OAM information of only one branch of the traffic signal. This approach is referred to as an SNC/N (non-instructive monitored) approach in the embodiments of the present invention.

Each branch of the reaching traffic signal can also be monitored in such a way that the source node, or a path which selects and receives a branch of the traffic signal, transports the traffic signal with monitored sub-layer OAM, and a path or the destination node which a plurality of branches of the traffic signal reach picks up the monitored sub-layer OAM from the respective branches of the traffic signal, and/or detects a channel of a server layer where the respective branches of the reaching traffic signal are located.

If the source node, or a path which selects and receives a branch of the traffic signal, can transport the traffic signal with monitored sub-layer OAM, the source node or the path shall insert the monitored sub-layer OAM into the traffic signal to be transported. Here, the source node can insert the monitored sub-layer OAM into each branch of the traffic signal before or after duplication of the traffic signal. Correspondingly, a path or the destination node which a plurality of branches of the traffic signal reach can pick up the monitored sub-layer OAM from the respective branches of the traffic signal. This approach is referred to as an SNC/S (sub-layer monitored) approach in the embodiments of the present invention.

Further, if a channel at a server layer where the traffic signal is located fails, a server layer failure or deterioration alarm can be exported on the adaptation function of the traffic signal transported over the sub-network connection to be protected and the server layer. The selector can select and receive a normal branch of the traffic signal based upon the alarm. A server layer can be monitored in various ways, such as insertion and pickup of OAM, etc. This approach is referred to as an SNC/I (inherent monitored) approach in the embodiments of the present invention.

Additionally, the traffic signal can be monitored by simultaneously using technical means such as insertion and pickup of monitored sub-layer OAM, monitoring of a channel at a server layer, etc.

It shall be noted that after a path which a plurality of branches of the traffic signal reach selects and receives one branch of the traffic signal, the selected and received branch of the traffic signal can also be duplicated at least once into a plurality of branches of the traffic signal, and one branch of the duplicated traffic signal are transported along the present path, while other branches of the duplicated traffic signal are transported to other paths. As can be evident from this, a plurality of bridges and/or selectors can be provided over the paths according to the embodiments of the present invention, so that more paths can be provided for traffic signal transport between the source node and the destination node.

According to embodiments of the present invention, the bridge and/or the selector over the path can be provided on at least one intermediate node.

The embodiments of the present invention further provide a communication network, including a source node and a destination node between which there are at least two paths. Specifically, the source node includes a bridge adapted to duplicate a traffic signal into a plurality of branches of the traffic signal and transport the same traffic signal along the respective paths. At least one bridge provided over at least one path is adapted to duplicate the traffic signal into a plurality of branches of the traffic signal, transport one branch of the duplicated traffic signal along the present path, and transport the other branches of the duplicated traffic signal to the other traffic paths. At least one selector provided over the destination node or a path which a plurality of branches of the traffic signal reach is adapted to select and receive one branch of the traffic signal.

As can be seen from above, the communication network according to the embodiments of the present invention can duplicate the traffic signal at least once into a plurality of branches of the traffic signal over at least one path, and then transport one branch of the duplicated traffic signal along the present path, and transport the other branches of the duplicated traffic signal to the other paths. In this case, the traffic signal can be transported over a plurality of paths between the source node and the destination node. Even if links over plurality of paths fail simultaneously, a link or path among the paths can interconnect links which do not fail over the paths so as to ensure normal communication between the source node and the destination node.

A path provided with a selector can also be provided with at least one bridge adapted to duplicate the selected and received traffic signal into a plurality of branches of the traffic signal, transport one branch of the duplicated traffic signal along the present path, and transport the other branches of the duplicated traffic signal to the other paths.

The destination node, or a path which a plurality of branches of the traffic signal reach, can be provided with a monitoring unit adapted to detect end-to-end overhead or OAM information of each branch of the reaching traffic signal, and/or detect sub-layer overhead or OAM information of each branch of the reaching traffic signal.

The source node, or the path with the selector, can also be provided with a monitored sub-layer OAM insertion unit adapted to insert monitored sub-layer OAM into the traffic signal.

The destination node, or the path with the selector, can also be provided with a monitored sub-layer OAM pickup unit adapted to pick up monitored sub-layer OAM from the traffic signal.

The source node, the destination node, or the path with the selector, can also be provided with a server layer channel detection unit adapted to detect a channel at a server layer where each branch of the reaching traffic signal is located.

A bridge and/or a selector over a path can be provided on at least one intermediate node over the path.

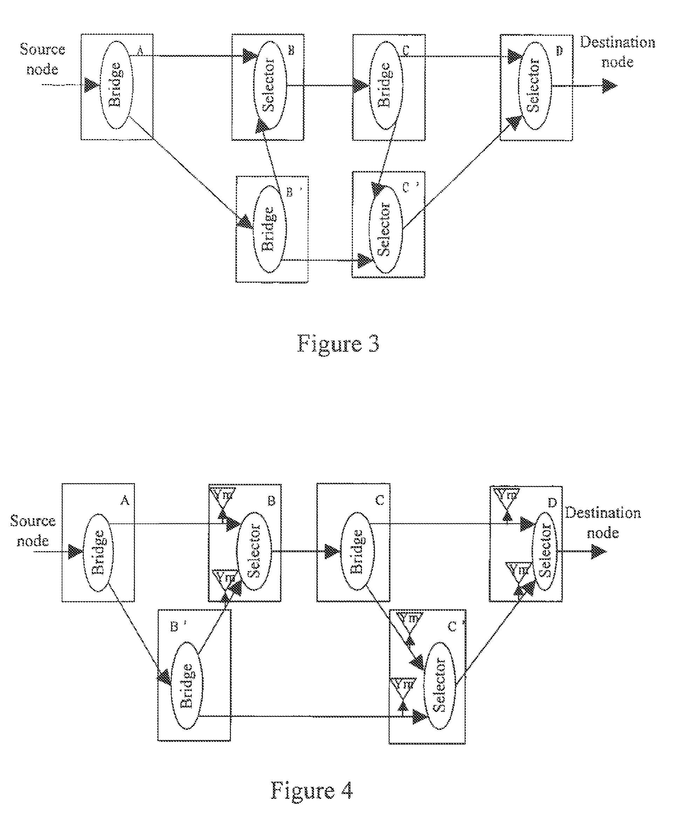

The embodiments of the present invention will be further described below with reference to Figure 3 to Figure 11. Figure 3 is a schematic diagram illustrating a first embodiment of the present invention. As illustrated in Figure 3, intermediate nodes B, C, B' and C' are provided between a source node A and a destination node D, where the source node A and the intermediate nodes B' and C are provided with bridges, and the intermediate nodes B and C' and the destination node D are provided with selectors. As illustrated in Figure 3, the bridge of the source node A duplicates an input traffic signal into two branches of the traffic signal and transports them respectively to the intermediate nodes B and B'. The bridge of the intermediate node B' duplicates the traffic signal into two branches of the traffic signal and transports them respectively to the intermediate node B and C'. The selector of the intermediate node B selects and receives one of the two branches of the traffic signal received simultaneously from the source node A and the intermediate node B' and transports the selected and received traffic signal to the intermediate node C, The bridge of the intermediate node C duplicates the traffic signal into two branches of the traffic signal and transports them respectively to the intermediate node C' and the destination node D. The selector of the intermediate node C' selects and receives one of the two branches of the traffic signal received simultaneously from the intermediate nodes B' and C and transports the selected and received traffic signal to the destination node D. The selector of the destination node D selects and receives one of the two branches of the traffic signal received simultaneously from the intermediate nodes C and C'. The destination node D can then transport the selected and received traffic signal to a next node.

Figure 4 is a schematic diagram illustrating a second embodiment of the present invention. The structure and means for traffic signal transport of the communication network illustrated in Figure 4 are substantially the same as those illustrated in Figure 3 except that two monitoring units as denoted with Ym are provided in front of the selectors of the intermediate nodes B and C' and the destination node D. The monitoring units each can detect end-to-end overhead or OAM information or sub-layer overhead or OAM information of one branch of the traffic signal. The OAM information is, for example, a Tandem Connection Monitoring (TCM) signal.

Based upon the detection result, the detectors respectively make judgments, and then select and transport a normal traffic signal to a downstream node. Either branch of the traffic signal can be selected and transported to the downstream node if both branches of the traffic signal are normal. This approach of monitoring the traffic signal can be referred to as an SNC/N (non-intrusive monitored) approach.

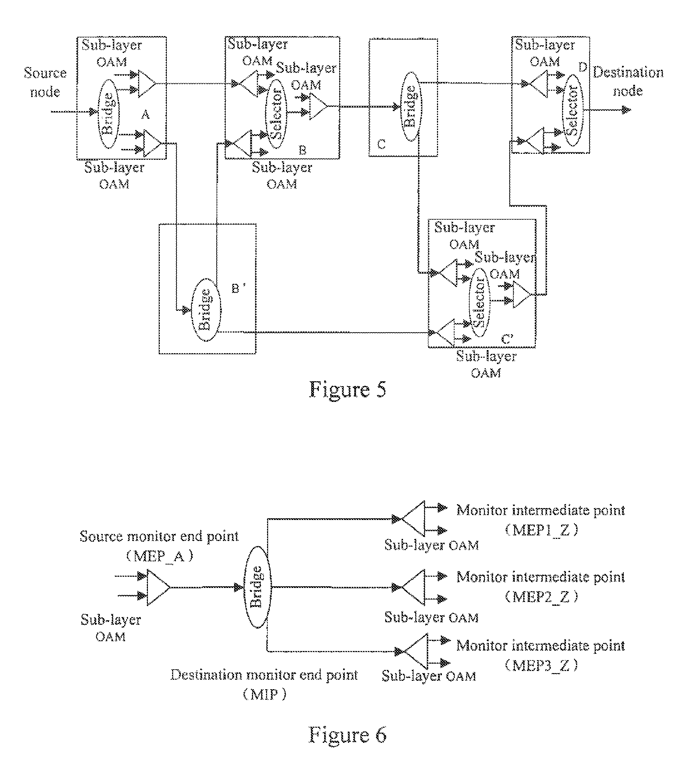

Figure 5 is a schematic diagram illustrating a third embodiment of the present invention. The structure and means for traffic signal transport of the communication network illustrated in Figure 5 are substantially the same as those illustrated in Figure 3. The difference is as follows, The source node A duplicates the traffic signal into two branches of the traffic signal and then inserts monitored sub-layer OAM into the respective branches of the traffic signal, respectively. After two branches of the traffic signal reach, the intermediate nodes B and C' and the destination node D pick up monitored sub-layer OAM respectively from the respective branches of the traffic signal, and thus select and receive one normal branch of the traffic signal, or select and receive either branch of the traffic signal if both of the branches of the traffic signal are normal, and then transport the selected and received branch of the traffic signal. The intermediate nodes B and C' insert monitored sub-layer OAM into the selected and received traffic signal prior to transport of the selected and received traffic signal to a next node. The functions of monitored sub-layer OAM insertion and pickup are denoted with triangular blocks in Figure 5, The monitored sub-layer OAM is, for example, a TCM signal.

It shall be noted that a bridge can duplicate not only a traffic signal but also a TCM signal. Therefore, the intermediate nodes B and C' receive the same TCM signal from the source node A after the bridge of the intermediate node B' duplicates the TCM signal. Thus, both Band C' can monitor a failure when the link between A and B' fails, However, C' can monitor a failure but B cannot when the link between B' and C' fails. Such a situation reflects truly whether the connections of A-B'-B and A-B'-C' are normal or not. This also applies to B-C-D and B-C-C'.

It shall be noted that in Figure 5, the immediate node B inserts monitored sub-layer OAM into the selected traffic signal and then transports the traffic signal respectively to the intermediate node C' and D via the intermediate node C, and the intermediate node C' and D pick up monitored sub-layer OAM from the received traffic signal. Thus, the intermediate nodes B-C-D and B-C-C' constitute a connection sub-layer of the sub-network in a multicast structure.

Figure 6 illustrates a monitoring function in a connection sub-layer of the sub-network in a multicast structure. Specifically in Figure 6, there are one source monitor end point MEP_A and three destination monitor end points MEP1_Z, MEP2__Z and MEP3_Z. The source monitor end point MEP_A inserts monitored sub-layer OAM into a traffic signal, and the monitored sub-layer OAM along with the traffic signal is duplicated and then transported by a monitor immediate point MIP to the three destination monitor end points. Thus, what each of the destination monitor end points monitors is the signal over the sub-network connection from MEP_A to the present destination monitor end point via MIP.

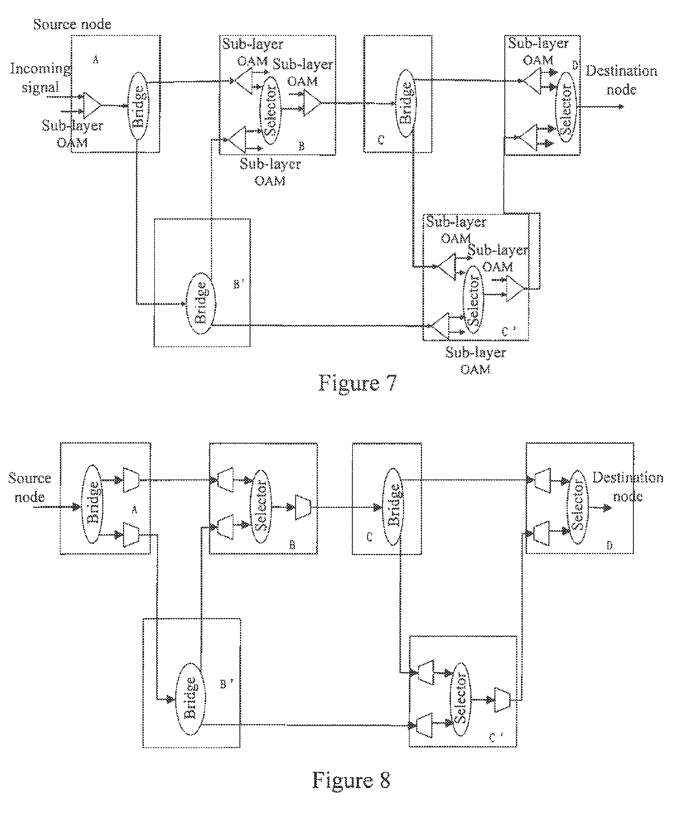

Furthermore, in Figure 5, the source node inserts monitored sub-layer OAM into each branch of the traffic signal after duplication of the traffic signal. In a practical application, the source node can also insert the monitored sub-layer OAM into the received traffic signal prior to duplication of the traffic signal. Figure 7 illustrates such a communication network structure where A-B, A-B'-B and A-B'-C' constitute a connection sub-layer of the sub-network in a multicast structure.

The approaches of monitoring the traffic signal as illustrated in Figure 5 and Figure 7 can be referred to as an SNC/S (sub-layer monitored) approach.

Figure 8 is a schematic diagram illustrating a fifth embodiment of the present invention. The structure and means for traffic signal transport of the communication network illustrated in Figure 8 are substantially the same as those illustrated in Figure 5 except that the intermediate nodes B and C' and D monitor a channel at a server layer, and such a monitoring function is denoted with trapezoid blocks in Figure 8.

It shall be noted that in Figure 8, the channel at the server layer from the source node A via the intermediate nodes B' to B and C' is a point-to-multipoint multicast channel. Thus, both B and C' can monitor a failure when the server layer between A and B' fails. However, C' can monitor a failure but B cannot when the server layer between B' and C' fails. Such a situation reflects truly whether the connections of A-B'-B and A-B'-C' are normal or not. This also applies to B-C-D and B-C-C'. As can be seen from Figure 8, B-C-D and B-C-C' constitute a multicast channel.

Further, a method for monitoring a multicast channel at a server layer is related to a server layer specific technology. That is, the method for monitoring a multicast channel at a server layer is not unique. For example, insertion and pickup of OAM can be adopted. Of course, OAM here is OAM at a server layer.

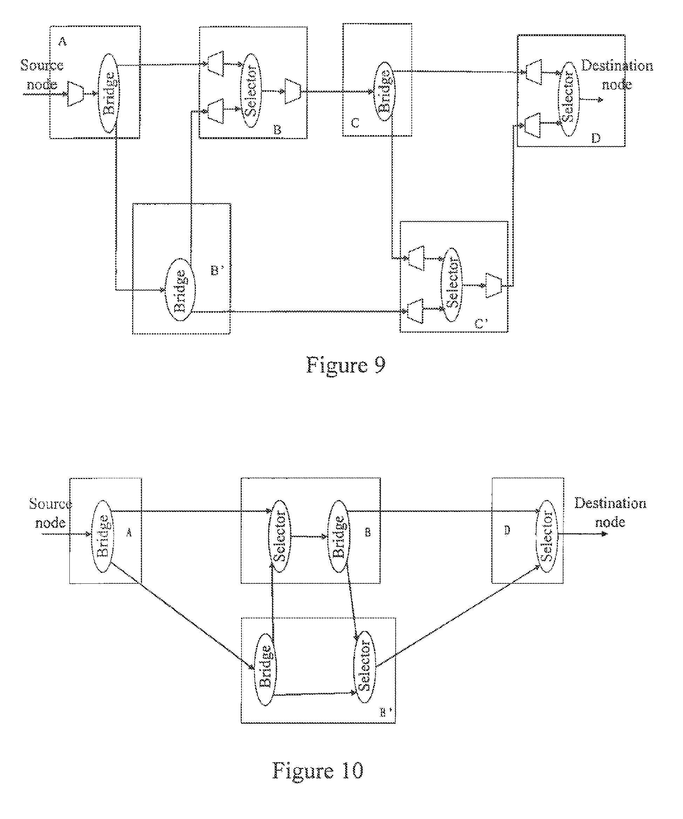

Furthermore, in Figure 8, the source node inserts OAM into each branch of the traffic signal after duplication of the traffic signal. In a practical application, the source can also insert OAM into the received traffic signal prior to duplication of the traffic signal. Figure 9 illustrates such a communication network structure where A-B, A-B'-B and A-B'-C' constitute a channel at a server layer in a multicast structure. The approaches of monitoring the traffic signal as illustrated in Figure 8 and Figure 9 can be referred to as an SNC/I (inherent monitored) approach.

It shall be noted that the monitoring approaches above can be applied in combination, i.e. one part of the sub-network connection can be monitored in one approach (e.g., SNC/S), another part of the sub-network connection can be monitored in another approach (e.g., SNC/I), and so on.

In a practical application, the communication network structures illustrated in Figure 3 to Figure 5 and Figure 7 to Figure 9 can integrate the functions of the intermediate nodes B and C on the same node, and also can integrate the functions of the intermediate nodes B' and C' on the same node. Such a communication network structure is as illustrated in Figure 10.

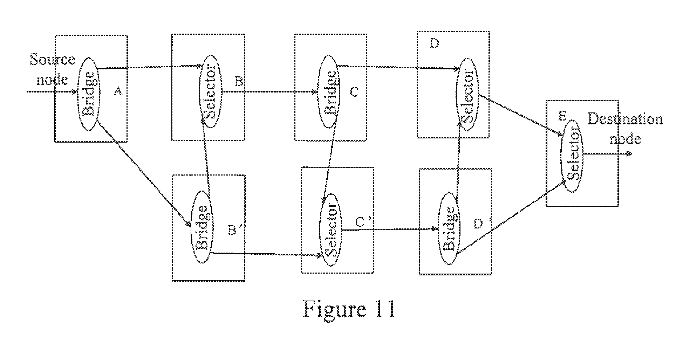

Further in the communication network structures illustrated in Figure 3 to Figure 5 and Figure 7 to Figure 9, the intermediate nodes B, C, B' and C are provided between the source node A and the destination node D, and each node is provided with only one bridge or selector. In a practical application, more intermediate nodes can be provided between the source node A and the destination node D. Figure 11 illustrates such a communication network structure provided with a plurality of intermediate nodes. In fact, a plurality of bridges and selectors are provided between the source node A and the destination node E in Figure 11. Further, each intermediate node can also be provided with a plurality of bridges and/or selectors. In one word, the communication network according to the embodiments of the present invention can be of plurality of implementation structures.

According to embodiments of the present invention, at least one of all paths between the source node and the destination node can duplicate a traffic signal at least once, and then transport one branch of the duplicated traffic signal along the present path, and transport the other branches of the duplicated traffic signal to the other paths. Thus, the destination node will not necessarily perform a switched ON/OFF action even if a link over a path fails. Taking Figure 3 as an example, if the link between A and B fails, A-B'-B can replace A-B, and carry together with B-C-D the traffic signal between the source node A and the destination node D. Therefore, the destination node can receive normally the traffic signal transported from the immediate node C even if the link between A and B fails.

The communication network structures illustrated above in Figure 3 to Figure 5 and Figure 7 to Figure 9 can be applied to communication network such as Multi-protocol Label Switching (MPLS) network, Ethernet, Synchronous Digital Hierarchy (SDH) network, etc.

It shall be apparent that numerous variations can be made to the embodiments of the present invention described herein without departing from the spirit and scope of the embodiments of the present invention. Accordingly, all variations which occur readily to those skilled in the art shall fall within the scope as defined in the appended claims.

## Claims

1. A protection method for traffic signal transport, comprising:
transporting, by a source node, the same traffic signal along each path between the source node and a destination node;
duplicating the traffic signal at least once into a plurality of branches of the traffic signal over at least one of the paths, transporting one of the branches of the duplicated traffic signal along the present path, and transporting the other branches of the duplicated traffic signal respectively to the other paths, wherein a path which a plurality of branches of the traffic signal reach selects, receives and transports one of the branches of the traffic signal; and
receiving, by the destination node, one of the branches of the traffic signal over at least one of the paths.

2. The protection method for traffic signal transport according to claim 1, wherein after the path which the plurality of branches of the traffic signal reach selects and receives one of the branches of the traffic signal, the method further comprises: duplicating the selected and received traffic signal at least once into a plurality of branches of the traffic signal, transporting one of the branches of the duplicated traffic signal along the present path, and transporting the other branches of the duplicated traffic signal respectively to the other paths.

3. The protection method for traffic signal transport according to claim 1, wherein the destination node, or the path which the plurality of branches of the traffic signal reach, selects and receives one of the branches of the traffic signal through:
monitoring signal quality of each of the branches of the reaching traffic signal; and
selecting and receiving, by the destination node, or the path which the plurality of branches of the traffic signal reach, one of the branches of the traffic signal with qualified signal quality.

4. The protection method for traffic signal transport according to claim 3, wherein each of the branches of the reaching traffic signal is monitored through:
detecting end-to-end overhead or OAM information of each of the branches of the reaching traffic signal; and/or
detecting sublayer overhead or OAM information of each of the branches of the reaching traffic signal.

5. The protection method for traffic signal transport according to claim 3, wherein each of the branches of the reaching traffic signal is monitored through:
transporting, by the source node, or the path which the plurality of branches of the traffic signal reach, the traffic signal with monitored sub-layer OAM; and
picking up, by the destination node, or the path which the plurality of branches of the traffic signal reach, the monitored sub-layer OAM from each of the branches of the traffic signal.

6. The protection method for traffic signal transport according to claim 5, wherein before the source node transports the traffic signal with the monitored sub-layer OAM, the method further comprises:
inserting, by the source node, the monitored sub-layer OAM into the traffic signal before duplication of the traffic signal; or
inserting, by the source node, the monitored sub-layer OAM into each of the branches of the traffic signal after duplication of the traffic signal.

7. The protection method for traffic signal transport according to claim 3, wherein each of the branches of the reaching traffic signal is monitored through:
detecting a channel at a server layer where each of the branches of the reaching traffic
signal is located.

8. The protection method for traffic signal transport according to claim 3, wherein the destination node, or the path which the plurality of branches of the traffic signal reach, selects and receives one of the branches of the traffic signal with qualified signal quality through:
selecting and receiving the branch of the traffic signal with qualified signal quality if there is only one branch of the traffic signal with qualified signal quality; or
selecting and receiving any one from the plurality of branches of the traffic signal with qualified signal quality if there are a plurality of branches of the traffic signal with qualified signal quality; or
selecting and receiving one with the highest signal quality from the plurality of branches of the traffic signal with qualified signal quality if there are a plurality of branches of the traffic signal with qualified signal quality.

9. A communication network comprising a source node and a destination node, between which there are at least two paths, wherein:
the source node comprises a bridge adapted to duplicate a traffic signal into a plurality of branches of the traffic signal and transport the same traffic signal along each path;
at least one bridge provided over at least one of the paths is adapted to duplicate the traffic signal into a plurality of branches of the traffic signal, transport one of the branches of the duplicated traffic signal along the present path, and transport the other branches of the duplicated traffic signal respectively to the other paths; and
at least one selector provided for the destination node or over a path which a plurality of branches of the traffic signal reach is adapted to select and receive one of the branches of the traffic signal.

10. The communication network according to claim 9, wherein the path with the selector is further provided with at least one bridge adapted to duplicate the selected and received traffic signal into a plurality of branches of the traffic signal, transport one of the branches of the duplicated traffic signal along the present path, and transport the other branches of the duplicated traffic signal respectively to the other paths.

11. The communication network according to claim 9, wherein a monitoring unit further provided for the destination node or over the path which the plurality of branches of the traffic signal reach is adapted to detect end-to-end overhead or OAM information of each of the branches of the reaching traffic signal, and/or detect sublayer overhead or OAM information of each of the branches of the reaching traffic signal.

12. The communication network according to claim 9, wherein a monitored sub-layer OAM insertion unit further provided for the source node or over the path with the selector is adapted to insert monitored sub-layer OAM into the traffic signal.

13. The communication network according to claim 12, wherein a monitored sub-layer OAM pickup unit further provided for the destination node or over the path with the selector is adapted to pick up monitored sub-layer OAM from each of the branches of the traffic signal.

14. The communication network according to claim 9, wherein a server layer channel detection unit further provided for the source node or the destination node or over the path with the selector is adapted to detect a channel at a server layer where each of the branches of the reaching traffic signal is located.

15. The communication network according to claim 9, wherein the bridge and/or the selector over the path is provided on at least one intermediate node over the path.
